# EUROPÄISCHE PATENTSCHRIFT

(11) **EP 2 225 899 B1**
(45) Veröffentlichungstag und Bekanntmachung des Hinweises auf die Patenterteilung: **20.02.2013**
(21) Anmeldenummer: 08860982.1
(22) Anmeldetag: 23.10.2008
(51) Int. Cl.: H04W 12/00

(54) **SCHUTZVORRICHTUNG**
PROTECTIVE DEVICE
DISPOSITIF DE PROTECTION

(30) Priorität: 19.12.2007 DE 102007061382
(43) Veröffentlichungstag der Anmeldung: 08.09.2010
(73) Patentinhaber: Robert Bosch GmbH, 70442 Stuttgart (DE)
(72) Erfinder: KRAPF, Reiner, 72770 Reutlingen (DE); BRAUN, Heiko, 70178 Stuttgart (DE); MAHLER, Michael, 70771 Leinfelden-Echterdingen (DE); WIELAND, Christoph, 70563 Stuttgart-Vaihingen (DE); HOFFMANN, Ulli, 75223 Niefern-Oeschelbronn (DE); DUNGER, Hartmut, 70771 Leinfelden-Echterdingen (DE)
(86) Internationale Anmeldenummer: PCT/EP2008/064378
(87) Internationale Veröffentlichungsnummer: WO 2009/077246

(56) Entgegenhaltungen:
- EP-A- 1 335 467
- EP-A- 1 667 304
- GB-A- 1 135 564
- FISCHER D ET AL: "DIGITAL TELEPROTECTION UNITS. A TECHNOLOGY OVERVIEW" IEEE TRANSACTIONS ON POWER DELIVERY, IEEE SERVICE CENTER, NEW YORK, NY, US, Bd. 7, Nr. 4, 1. Oktober 1992 (1992-10-01), Seiten 1769-1774, XP000298186 ISSN: 0885-8977

## Beschreibung

### Stand der Technik

Die Erfindung geht aus von einer Schutzvorrichtung nach dem Oberbegriff des Anspruchs 1.

Die EP 1 335 467 A1 offenbart ein Verfahren zum Empfang von digital codierten Schutzsignalen in einem Fernauslösegerät sowie ein Fernauslösegerät. Fernauslösegeräte oder Schutzsignalübertragungsgeräte dienen zur Übertragung von Schutz- oder Schaltbefehlen für einen Distanzschutz in elektrischen Hoch- und Mittelspannungsnetzen. Schutzbefehle bewirken dabei beispielsweise eine direkte oder indirekte Öffnung eines Schutzschalters und dadurch eine elektrische Abtrennung eines Teils des Netzes oder der Anlage. In dem Fernauslösegerät bzw. dem Verfahren zum Empfang von digltal codierten Schutzsignalen in einem Fernauslösegerät gemäß der EP 1 335 467 A1 wird eine Sequenz von digitalen Codewörtern auf einem Übertragungskanal empfangen. Ein Schutzsignal gilt dabei als empfangen, wenn in dieser Sequenz ein dem Schutzsignal entsprechender Code innerhalb eines Zeitfensters vorgegebener Länge eine Anzahl n mal detektiert wurde, wobei die Anzahl n nach Maßgabe einer Schätzung eines aktuellen Maßes für eine Störung des Übertragungskanals bestimmt wird.

### Vorteile der Erfindung

Es wird eine Schutzvorrichtung vorgeschlagen, insbesondere zum Schutz eines passiven Dienstes vor einem Störsignal eines Elektrogeräts, mit einer Sendeeinheit zum Aussenden eines Schutzsignals. In diesem Zusammenhang soll unter einem "passiven Dienst" insbesondere ein Funkdienst verstanden werden, der nur zu einem Empfangen von Signalen vorgesehen ist, wie beispielsweise eine Empfangseinheit für die Radioastronomie, die zu einem Empfangen von Radiostrahlung vorgesehen ist, und/oder weitere, dem Fachmann als sinnvoll erscheinende passive Dienste. Besonders vorteilhaft erfolgt die Aussendung des Schutzsignals in einem ISM-Band-Bereich mit beispielsweise einer Sendefrequenz von 433 MHz. Dabei soll unter einem "ISM-Band" (Industrial, Scientific, and Medical Band) insbesondere ein Frequenzbereich verstanden werden, der durch Hochfrequenz-Geräte in Industrie, Wissenschaft, Medizin, sowie in häuslichen und ähnlichen Bereichen genutzt werden kann, wie beispielsweise das 433-MHz-Band, das 2,4-GHz-Band usw. Vorzugsweise ist die Schutzvorrichtung in einer unmittelbaren Nähe zu einer Empfangseinheit des passiven Funkdienstes angeordnet, wie beispielsweise eine von einer Schutzbake gebildete Schutzvorrichtung, die direktneben einem Radioastronomieteleskop platziert ist, wobei das Schutzsignal der Schutzvorrichtung von mehreren, vorzugsweise unterschiedlichen Elektrogeräten empfangen werden kann. Unter einem "Störsignal" soll hierbei insbesondere ein Signal verstanden werden, das von dem Elektrogerät ausgesendet wird und dabei einen Betrieb, insbesondere einen Empfangsbetrieb, des passiven Dienstes stört. Das Störsignal kann zudem von einem Ultrabreitbandsignal gebildet sein, wobei unter einem "Ultrabreitbandsginal (oder Ultra Wide Band Signal oder UWB-Signal)" insbesondere ein elektromagnetisches Signal verstanden werden soll, welches einen Nutzfrequenzbereich mit einer Mittelfrequenz im Frequenzbereich von 1 GHz bis 15 GHz und einer Frequenzbandbreite von zumindest 500 MHz aufweist. Durch die erfindungsgemäße Ausgestaltung können insbesondere passive Funkdienste vorteilhaft vor einer unerwünschten Störung durch ein Elektrogerät geschützt werden und damit ein insbesondere störungsfreier Betrieb und/oder ein Betrieb mit geringerem elektronischen Rauschen des passiven Dienstes erzielt werden. Vorzugsweise ist das Elektrogerät zu einem Empfangen und insbesondere einem Erkennen des ausgesendeten Schutzsignals vorgesehen, so dass insbesondere bei Vorliegen des Schutzsignals in dem Elektrogerät eine Sendeleistung und/oder eine Sendefrequenz geändert werden kann.

Des Weiteren wird vorgeschlagen, dass das Schutzsignal von einem kodierten Schutzsignal gebildet ist. In diesem Zusammenhang soll unter einem "kodierten Signal" hierbei insbesondere ein von der Schutzvorrichtung, insbesondere der Sendeeinheit, ausgesendetes Schutzsignal verstanden werden, das insbesondere aus einer speziellen Abfolge von Signalelementen aufgebaut ist und sowohl von der Sendeeinheit als auch von einer Empfangseinheit, wie beispielsweise einer Empfangseinheit eines Elektrogeräts, anhand der speziellen Abfolge der Signalelemente erkannt wird. Durch die erfindungsgemäße Ausgestaltung kann eine vorteilhafte Unterscheidung des Schutzsignals von weiteren Signalen, wie beispielsweise von Messsignalen eines Elektrowerkzeugs, ein Signal einer Funkverbindung, ein WLAN-Signal usw., erreicht werden.

Es wird ferner vorgeschlagen, dass ein Betrieb der Sendeeinheit an zumindest einen Betriebsmodus des passiven Dienstes gekoppelt ist, wodurch vorteilhaft Betriebskosten eingespart und/oder ein Abnutzungsgrad zumindest teilweise reduziert werden kann. Dabei soll unter "gekoppelt" insbesondere verstanden werden, dass mit einem Anschalten des passiven Dienstes die Schutzvorrichtung, insbesondere die Sendeeinheit, ebenfalls in einen angeschalteten Betriebsmodus übergeht und bei einem ausgeschalteten passiven Dienst die Sendeeinheit deaktiviert bzw. ebenfalls ausgeschaltet ist.

Ein störungsfreier Betrieb eines außerhalb eines Schutzradius befindlichen Elektrogeräts kann vorteilhaft erreicht werden, wenn die Sendeeinheit dazu vorgesehen ist, ein Schutzsignal mit einer auf einen Schutzradius begrenzten Signalleistung auszusenden. In diesem Zusammenhang soll unter "vorgesehen" insbesondere speziell ausgestattet und/oder speziell ausgelegt verstanden werden. Vorzugsweise ist eine Leistung des Schutzsignals mit einer Reichweite nur innerhalb des Schutzradius ausgelegt. In diesem Zusammenhang soll unter einem "Schutzradius" insbesondere ein Mindestabstand zwischen der Schutzvorrichtung bzw. dem passiven Dienst und dem Elektrogerät verstanden werden, bei dem ein störungsfreier Betrieb des passiven Dienstes während eines regulären Betriebs des Elektrogeräts möglich ist.

Es wird zudem vorgeschlagen, dass die Schutzvorrichtung eine Empfangseinheit aufweist, die zu einem Empfangen eines Schutzsignals eines Elektrogeräts vorgesehen ist, wodurch konstruktiv einfach eine Aussendung des Schutzsignals der Schutzvorrichtung durch eine Reflexion des Schutzsignals des Elektrogeräts erreicht werden kann. Es kann zudem ein energiesparender Betrieb der Schutzvorrichtung erzielt werden.

Ein insbesondere gleichzeitiges Aussenden und Empfangen eines Schutzsignals mittels der Schutzvorrichtung, insbesondere der Sendeeinheit und der Empfangseinheit, kann erreicht werden, wenn die Schutzvorrichtung eine bidirektionale Schnittstelle aufweist. Ein Aussenden und ein Empfangen des Schutzsignals kann zudem auf einem ISM-Band oder auf zwei verschiedenen ISM-Bändern erfolgen.

In einer weiteren Ausgestaltung der Erfindung wird ein Elektrogerät vorgeschlagen mit einer Messvorrichtung zum Aussenden und/oder Empfangen eines Messsignals und einer Fremdsignalerkennungseinheit, wobei die Fremdsignalerkennungseinheit zu einem Detektieren eines Schutzsignals einer Schutzvorrichtung zum Schutz eines passiven Dienstes vorgesehen ist. Vorzugsweise weist die Messvorrichtung eine Ultrabreitbandeinheit auf, die zu einer Ultrabreitbandmessung vorgesehen ist, wobei die Ultrabreitbandeinheit ein Ultrabreitbandsignal aussendet und/oder detektiert. Durch die erfindungsgemäße Ausgestaltung der Erfindung kann vorteilhaft das von der Schutzvorrichtung ausgesendete Schutzsignal innerhalb des Elektrogeräts erkannt bzw. detektiert und damit der passive Dienst vor einer Störung durch das Elektrogerät geschützt werden. Die Fremdsignalerkennungseinheit kann neben einer Detektion des Schutzsignals zudem zu einer Detektion von weiteren Fremdsignalen weiterer Funkdienste, wie beispielsweise ein Signal einer Flugsicherung, vorgesehen sein, die durch einen Betrieb der Messvorrichtung gestört werden könnten, wobei vorzugsweise ein uneingeschränkter Betrieb der Messvorrichtung nur möglich ist, wenn die Fremdsignalerkennungseinheit vor einem Betrieb der Messvorrichtung bzw. im Betrieb der Messvorrichtung kein Fremdsignal bzw. kein Schutzsignal detektiert. Vorzugsweise erfolgt eine Fremdsignalerkennung mittels der Fremdsignalerkennungseinheit nach einem "Listen-Before-Talk"-Prinzip.

Es wird ferner vorgeschlagen, dass die Fremdsignalerkennungseinheit ein Dekodierelement aufweist, die zu einem Dekodieren eines empfangenen Schutzsignals vorgesehen ist, wodurch vorteilhaft ein kodiertes Schutzsignal empfangen bzw. das Schutzsignal von weiteren Signalen unterschieden und als Schutzsignal erkannt werden kann.

Zudem wird vorgeschlagen, dass die Fremdsignalerkennungseinheit eine bidirektionale Schnittstelle aufweist, wodurch vorteilhaft zeitgleich ein Schutzsignal der Schutzvorrichtung empfangen und ein Schutzsignal an die Schutzvorrichtung ausgesendet werden kann. Ein Aussenden und ein Empfangen des Schutzsignals kann zudem auf einem ISM-Band oder auf zwei verschiedenen ISM-Bändern erfolgen.

Des Weiteren wird vorgeschlagen, dass das Elektrogerät eine Recheneinheit aufweist, die dazu vorgesehen ist, einen Abstand zur Schutzvorrichtung bei Vorliegen eines detektierten Schutzsignals der Schutzvorrichtung zu bestimmen, wodurch vorteilhaft ein Mindestabstand der Messvorrichtung zu einem passiven Dienst eingehalten werden kann und/oder die Messvorrichtung außerhalb des Mindestabstands gegenüber dem passiven Dienst angeordnet werden kann, wie dies insbesondere bei einem mobilen und/oder tragbaren Elektrogerät mit einer Messvorrichtung der Fall ist, so dass eine Störung des passiven Dienstes und/oder weiterer Funkdienste vorteilhaft verhindert werden kann. In diesem Zusammenhang soll unter einer "Recheneinheit" insbesondere eine Einheit verstanden werden, die von einer Steuereinheit, einer Auswerteeinheit, einer Kontrolleinheit und/oder einer Regeleinheit gebildet ist, wobei die Recheneinheit sowohl von einem Prozessor allein als auch insbesondere von einem Prozessor und weiteren Elektronikbauteilen, wie Speichermitteln, gebildet sein kann. Ein Abstand zwischen der Messvorrichtung und des passiven Dienstes kann dabei anhand eines detektierten, von der Schutzvorrichtung ausgesendeten Leistungsspektrums ermittelt werden und/oder mittels einer Laufzeit eines Schutzsignals zwischen der Fremdsignalerkennungseinheit und der Schutzvorrichtung.

Es wird ferner vorgeschlagen, dass die Recheneinheit zu einer Änderung einer Messfrequenz und/oder einer Änderung eines Leistungsspektrums der Messvorrichtung bei Vorliegen eines detektierten Schutzsignals und/oder bei Unterschreiten eines Sicherheitsabstands zur Schutzvorrichtung vorgesehen ist, wodurch vorteilhaft ein den passiven Dienst bzw. einen Betrieb des passiven Dienstes störendes Signal unterdrückt und/oder ausgeschaltet werden kann und ein zukünftiger störungsfreier Betrieb des passiven Dienstes ermöglicht wird.

In einer vorteilhaften Weiterbildung der Erfindung wird ein System mit einer Schutzvorrichtung und zumindest einem Elektrogerät vorgeschlagen, wobei die Schutzvorrichtung zu einer Aussendung des Schutzsignals mit einer auf die Recheneinheit des Elektrogeräts abgestimmten Sendeleistung vorgesehen ist. Hierdurch kann anhand einer detektierten Leistung des Schutzsignals durch das Elektrogerät ein Abstand zu dem passiven Dienst ermittelt werden und gegebenenfalls ein Mindestabstand zu dem passiven Dienst eingehalten werden bzw. das Elektrogerät von einem Bediener außerhalb eines Schutzradius des passiven Dienstes gebracht werden, wie beispielsweise bei einem mobilen und/oder tragbaren Elektrogerät mit einer Messvorrichtung, um so eine Störung des passiven Dienstes und/oder weiterer Funkdienste vorteilhaft zu verhindern. Vorzugsweise kann das von der Schutzvorrichtung ausgesandte Schutzsignal von mehreren Elektrogeräten empfangen werden.

Es wird weiterhin vorgeschlagen, dass die Fremdsignalerkennungseinheit zur Aussendung eines Schutzsignals für die Schutzvorrichtung vorgesehen ist, wodurch vorteilhaft ein Abstand des Elektrogeräts zu dem passiven Dienst bzw. der Schutzvorrichtung anhand einer Laufzeit des Schutzsignals ermittelt werden kann.

Ist zudem die Schutzvorrichtung zu einem Empfangen und/oder zu einer Reflektion des Schutzsignals der Fremdsignalerkennungseinheit vorgesehen, kann ein besonders energiesparender Betrieb der Schutzvorrichtung erzielt werden und/oder es kann konstruktiv einfach eine Aussendung des Schutzsignals der Schutzvorrichtung durch eine Reflexion des von der Fremdsignalerkennungseinheit ausgesandten Schutzsignals erreicht werden.

In einer weiteren Ausgestaltung der Erfindung wird ein Verfahren für das System vorgeschlagen, wobei ein Schutzsignal durch eine Schutzvorrichtung ausgesendet wird. Hierdurch können insbesondere passive Funkdienste vorteilhaft vor einer unerwünschten Störung durch Elektrogeräte, die ein Funksignal aussenden, geschützt werden.

Ferner wird vorgeschlagen, dass das Schutzsignal mit einer auf den Schutzradius begrenzten Sendeleistung ausgesandt wird, wodurch ein störungsfreier Betrieb eines außerhalb eines Schutzradius befindlichen Elektrogeräts vorteilhaft erreicht werden kann.

Wird zudem ein Abstand zwischen der Schutzvorrichtung und dem Elektrogerät bestimmt, kann vorteilhaft ein Mindestabstand der Messvorrichtung zu einem passiven Dienst eingehalten werden und/oder die Messvorrichtung außerhalb des Mindestabstands gegenüber dem passiven Dienst angeordnet werden, wie dies insbesondere bei einem mobilen und/oder tragbaren Elektrogerät mit einer Messvorrichtung der Fall ist, so dass eine Störung des passiven Dienstes und/oder weiterer Funkdienste vorteilhaft verhindert werden kann. Vorzugsweise wird dabei ein Abstand zwischen dem Elektrogerät und dem passiven Dienst bzw. der Schutzvorrichtung mittels einer empfangenen Leistung durch die Fremdsignalerkennungseinheit und/oder mittels einer Laufzeit des Schutzsignals zwischen der Schutzvorrichtung und der Fremdsignalerkennungseinheit ermittelt.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmä-Bigerweise auch einzeln betrachten und zu sinnvollen weiteren Kombinationen zusammenfassen.

Es zeigen:
- Fig. 1: ein erfindungsgemäßes System mit einem Elektrogerät und einer Schutzvorrichtung zum Schutz eines passiven Dienstes in einer schematischen Darstellung und
- Fig. 2: ein alternatives System mit der Schutzvorrichtung und zwei Elektrogeräten in einer schematischen Darstellung.

### Beschreibung der Ausführungsbeispiele

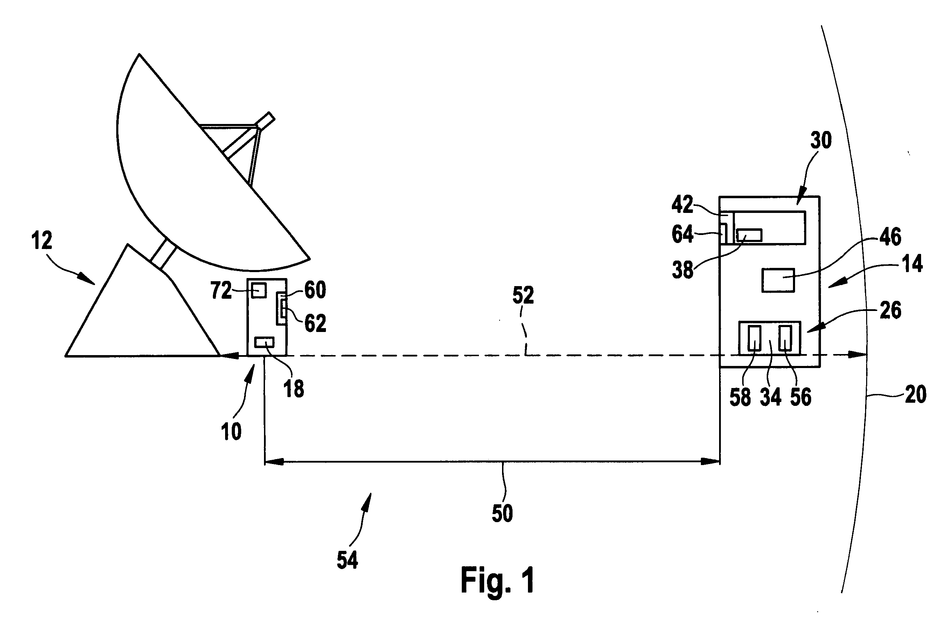

In Figur 1 ist ein System 54 mit einer Schutzvorrichtung 10 und einem Elektrogerät 14 in einer schematischen Darstellung zu sehen. Die Schutzvorrichtung 10 ist von einer Schutzbake gebildet und zu einem Aussenden eines Schutzsignals zu einem Schutz eines passiven Dienstes 12, der hier von einem Radioastronomieteleskop dargestellt ist, vor einem Störsignal des Elektrogeräts 14 vorgesehen. Hierzu ist die Schutzvorrichtung 10 direkt neben dem Radioastronomieteleskop angeordnet. Das Elektrogerät 14 weist eine Messvorrichtung 26 zu einer Messung auf, wobei die Messvorrichtung 26 von einer Ultrabreitbandeinheit 34 gebildet ist. Hierbei wird während eines Betriebs des Elektrogeräts 14 bzw. der Messvorrichtung 26 ein Ultrabreitbandsignal ausgesendet bzw. ein ausgesendetes Ultrabreitbandsignal empfangen. Die Messvorrichtung weist hierzu eine Sendeeinheit 56 und eine Empfangseinheit 58 auf. Das Elektrogerät 14 kann von jedem, ein Radarfunksignal, insbesondere ein Ultrabreitbandsignal, aussendendes Elektrogerät 14 gebildet sein, wie beispielsweise von einem Elektrowerkzeug, einem Funktelefon, einem Elektrogerät mit einer WLAN-Verbindung usw.

Die Schutzvorrichtung 10 weist eine Sendeeinheit 18 und eine Schnittstelle 60 mit einem Antennenelement 62 auf, wobei die Sendeeinheit 18 zusammen mit der Schnittstelle 60 bzw. dem Antennenelement 62 zum Aussenden des Schutzsignals vorgesehen ist. Das Schutzsignal wird hierzu von der Sendeeinheit 18 generiert und über eine nicht näher dargestellte, interne Datenleitung an die Schnittstelle 60 bzw. das Antennenelement 62 geleitet und von diesen auf einem ISM-Band ausgesendet, beispielsweise bei 433 MHz. Die Schutzvorrichtung 10 weist zudem eine Steuereinheit 72 auf, die einen Betrieb der Sendeeinheit 18 an einen Betriebsmodus des Radioastronomieteleskops koppelt, wobei die Steuereinheit 72 über die nicht näher dargestellte Datenleitung mit der Sendeeinheit 18 und dem passiven Dienst 12 verbunden ist. Die Schutzvorrichtung 10 bzw. deren Sendeeinheit 18 sendet dabei nur ein Schutzsignal aus bzw. gibt dieses über die interne Datenleitung an das Antennenelement 62 weiter, wenn das Radioastronomieteleskop in einem Empfangsmodus zum Empfangen von Radiosignalen bzw. Radiostrahlungen geschalten ist. Zudem sendet die Sendeeinheit 18 im Betrieb des Radioastronomieteleskops ein kodiertes Schutzsignal aus, so dass das von der Schutzvorrichtung 10 ausgesendete Schutzsignal von weiteren, von dem Elektrogerät 14 empfangbaren Funksignalen bzw. Ultrabreitbandsignalen innerhalb des Elektrogeräts 14 unterschieden werden kann und als Schutzsignal erkannt werden kann.

Das Elektrogerät 14 weist zu einem Empfangen des Schutzsignals der Schutzvorrichtung 10 eine Fremdsignalerkennungseinheit 30 auf. Vor einem Betrieb der Messvorrichtung 26 bzw. während eines Betriebs der Messvorrichtung 26 wird mittels der Fremdsignalerkennungseinheit 30 nach dem Schutzsignal der Schutzvorrichtung 10 detektiert, um den passiven Dienst 12 vor einem Messsignal des Elektrogerätes 14 zu schützen. Des Weiteren ist es zudem auch denkbar, dass die Fremdsignalerkennungseinheit 30 zu einer Detektion weiterer Fremdsignale weiterer Funkdienste, wie beispielsweise ein Signal einer Flugüberwachung usw., vorgesehen ist, die durch die Messvorrichtung 26 bzw. ein von der Messvorrichtung 26 ausgesendetes Messsignal gestört werden könnten. Zu einer Erkennung des Schutzsignals der Schutzvorrichtung 10 weist die Fremdsignalerkennungseinheit 30 ein Dekodierelement 38 auf, welches das von der Schutzvorrichtung 10 kodiert ausgesandte Schutzsignal dekodiert. Ferner weist die Fremdsignalerkennungseinheit 30 eine bidirektionale Schnittstelle 42 mit einer Antenneneinheit 64 auf, mittels der das von der Schutzvorrichtung 10 ausgesandte Schutzsignal empfangen werden kann. Mittels der bidirektionalen Schnittstelle 42 ist zudem ein zeitgleiches Aussenden des Messsignals und ein Empfangen des Messsignals durch die Messvorrichtung 26 und ein Empfangen des Schutzsignals durch die Fremdsignalerkennungseinheit 30 möglich. Des Weiteren weist das Elektrogerät 14 eine Recheneinheit 46 auf, die einen Betrieb der Messvorrichtung 14, insbesondere der Sendeeinheit 56 der Messvorrichtung 26, abhängig von detektierten Daten der Fremdsignalerkennungseinheit 30 steuert. Ein Datenaustausch bzw. eine Datenübertragung zwischen der Recheneinheit 46, der Messvorrichtung 26 und der Fremdsignalerkennungseinheit 30 erfolgt über eine nicht näher dargestellte Datenleitung.

Das von der Sendeeinheit 18 der Schutzvorrichtung 10 ausgesandte kodierte Schutzsignal weist eine Sendeleistung auf, die auf einen Schutzradius 20 um die Schutzvorrichtung 10 und damit insbesondere um den passiven Dienst 12 beschränkt ist. Der Schutzradius 20 entspricht dabei einem Mindestabstand, den ein für den passiven Dienst 12 störendes Signal aussendendes Elektrogerät 14 bezüglich des passiven Dienstes 12 einhalten muss, damit sowohl ein störungsfreier Betrieb des passiven Dienstes 12 als auch ein uneingeschränkter Betrieb der Messvorrichtung 26 des Elektrogeräts 14 möglich ist. Befindet sich das Elektrogerät 14 innerhalb des Schutzradius 20 zu dem passiven Dienst 12, wird von der Fremdsignalerkennungseinheit 30 ein Schutzsignal detektiert. Sobald ein Schutzsignal mittels der Fremdsignalerkennungseinheit 30 erkannt ist und diese Information der Recheneinheit 46 durch Weiterleitung an die Recheneinheit 46 vorliegt, wird durch die Recheneinheit 46 ein Einschalten der Messvorrichtung 26 bzw. der Sendeeinheit 56 verhindert bzw. es wird ein Betrieb der Messvorrichtung 26 abgebrochen, so dass eine Störung des passiven Dienstes 12 unterbunden ist. Alternativ hierzu kann die Recheneinheit 46 im Falle eines detektierten, von der Schutzvorrichtung 10 ausgesendeten Schutzsignals auch eine Sendeleistung eines ausgesendeten Messsignals der Sendeeinheit 56 verringern und/oder eine Messfrequenz des von der Sendeeinheit 56 auszusendenden Messsignals verändern, so dass eine Störung des passiven Dienstes 12 durch das Elektrogerät 14 verhindert ist.

Alternativ oder zusätzlich kann auch ein Abstand 50 zwischen der Schutzvorrichtung 10 bzw. dem passiven Dienst 12 und dem Elektrogerät 14 mittels der Recheneinheit 46 ermittelt werden. Hierzu wird von der Sendeeinheit 18 der Schutzvorrichtung 10 ein Schutzsignal mit einer konstanten, fest eingestellten Sendeleistung ausgesandt, wobei die konstante Sendeleistung der Recheneinheit 46 durch das kodierte Schutzsignal übermittelt wird. Grundsätzlich ist es jedoch auch denkbar, dass die Schutzvorrichtung 10 eine feste, unveränderbare Sendeleistung aussendet, deren Wert beispielsweise bei einem Aufspielen einer Betriebssteuerung und/oder einer Betriebssoftware in der Recheneinheit 46 bereits in einem nicht näher dargestellten Speicher der Recheneinheit 46 gespeichert wird. Anhand empfangener Schutzsignaldaten durch die Fremdsignalerkennungseinheit 30 wird in der Recheneinheit 46 eine empfangene Schutzsignalstärke bzw. eine empfangene Schutzsignalleistung ermittelt und mit der in der Recheneinheit 46 bekannten, von der Schutzvorrichtung 10 ausgesendeten Schutzsignalleistung verglichen. Mittels einer Leistungsdifferenz zwischen der ausgesendeten und der empfangenen Schutzsignalleistung wird von der Recheneinheit 46 der Abstand 50 des Elektrogeräts 14 zu der Schutzvorrichtung 10 bzw. dem passiven Dienst 12 errechnet.

Bei einem Unterschreiten eines Sicherheitsabstands 52, der im Wesentlichen dem Schutzradius 20 entspricht, wird durch die Recheneinheit 46 ein Starten der Messvorrichtung 26 verhindert bzw. ein Betrieb der Messvorrichtung 26 abgebrochen. Zudem kann auch von der Recheneinheit 46 ein Wert einer von der Messvorrichtung 26 ausgesandten Leistung und/oder ausgesandten Frequenz geändert werden bzw. an den Abstand zu dem passiven Dienst angepasst werden, wobei die geänderte Leistung und/oder die geänderte Frequenz der Messvorrichtung 26 jeweils einen ungestörten Betrieb des passiven Dienstes 12 gewährleisten muss.

Grundsätzlich ist es in einer weiteren Ausgestaltung der Erfindung denkbar, dass das von der Schutzvorrichtung 10 ausgesandte Schutzsignal zum Schutz des passiven Dienstes 12 von mehr als einem Elektrogerät 14 empfangen wird. Vorzugsweise ist zum Schutz des passiven Dienstes 12 eine einzige Schutzvorrichtung 10 vorgesehen, deren Schutzsignal von allen in einer Nähe zu dem passiven Dienst 12 befindlichen Elektrogeräten 14 empfangen werden kann.

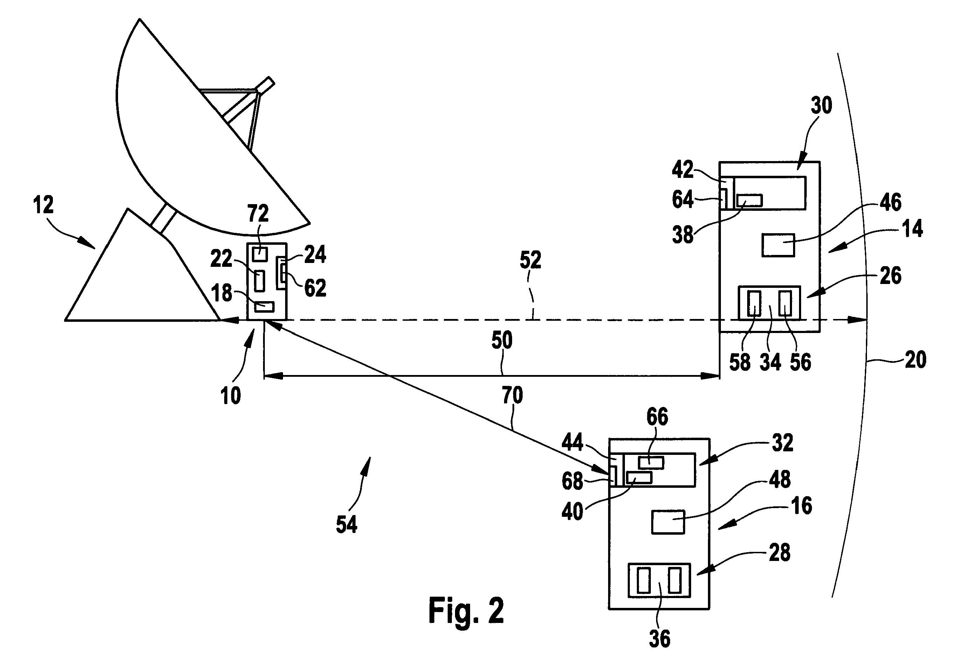

In Figur 2 ist ein zu Figur 1 alternatives System 54 mit einer Schutzvorrichtung 10 für einen passiven Dienst 12 und zwei Elektrogeräten 14, 16 schematisch dargestellt. Im Wesentlichen gleich bleibende Bauteile, Merkmale und Funktionen sind grundsätzlich mit den gleichen Bezugszeichen beziffert. Die nachfolgende Beschreibung beschränkt sich im Wesentlichen auf die Unterschiede zu dem Ausführungsbeispiel in Figur 1, wobei bezüglich gleich bleibender Bauteile, Merkmale und Funktionen auf die Beschreibung des Ausführungsbeispiels in der Figur 1 verwiesen werden kann.

Die Schutzvorrichtung 10 weist neben einer Sendeeinheit 18 zu einem Aussenden eines Schutzsignals zudem eine Empfangseinheit 22 auf, die zu einem Empfangen eines von einem der beiden Elektrogeräte 16 ausgesandten Signals vorgesehen ist. Hierzu weist die Schutzvorrichtung 10 eine bidirektionale Schnittstelle 24 auf, die zeitgleich zu einem Empfangen eines von einem Elektrogerät 16 ausgesandten Signals und zu einem Aussenden eines Schutzsignals durch die Sendeeinheit 18 vorgesehen ist.

Eines der beiden Elektrogeräte 14 ist nur zu einem Empfangen eines Schutzsignals der Schutzvorrichtung 10 vorgesehen und weist hierzu eine Fremdsignalerkennungseinheit 30 analog zu der Beschreibung zu Figur 1 auf.

Das weitere der beiden Elektrogeräte 16 weist eine Messvorrichtung 28, die von einer Ultrabreitbandeinheit 36 gebildet ist, und eine Fremdsignalerkennungseinheit 32 mit einem Sendemittel 66 zu einem Aussenden eines kodierten Schutzsignals auf. Im Betrieb des passiven Dienstes 12 bzw. der Schutzvorrichtung 10 wird das von der Fremdsignalerkennungseinheit 32 des Elektrogeräts 16 ausgesandte Signal empfangen und reflektiert. Mittels einer bidirektionalen Schnittstelle 44 mit einer Antenneneinheit 68 zu einem Aussenden und einem Empfangen von Signalen kann in der Fremdsignalerkennungseinheit 32 zeitgleich ein Schutzsignal ausgesendet und ein weiteres Schutzsignal, das von der Schutzvorrichtung 10 reflektiert wurde bzw. von der Sendeeinheit 18 der Schutzvorrichtung 10 ausgesandt wurde, empfangen werden. Die in der Fremdsignalerkennungseinheit 32 empfangenen Schutzsignale werden mittels eines Dekodierelements 40 dekodiert und zusammen mit den Informationen der durch die Fremdsignalerkennungseinheit 32 ausgesandten Schutzsignale an eine Recheneinheit 48 des Elektrogeräts 16 weitergeleitet. In der Recheneinheit 48 wird daraufhin ein Abstand 70 des Elektrogeräts 16 zu der Schutzvorrichtung 10 bzw. dem passiven Dienst 12 mittels einer Laufzeit der Schutzsignale errechnet und mit einem Sicherheitsabstand 52 verglichen. Ist der von der Recheneinheit 48 errechnete Abstand 70 kleiner als der Sicherheitsabstand 52, werden von der Recheneinheit 48 Schutzmaßnahmen zu einem Schutz des passiven Dienstes 12 eingeleitet, die den Schutzmaßnahmen in der Beschreibung zu Figur 1 entsprechen.

## Patentansprüche

1. Schutzverfahren zum Schutz eines passiven Funkdlenstes zum Empfang von Signalen (12) vor einem Ultrabreitband-Störsignal eines Elektrogeräts (14, 16), mit einer Sendeeinheit (18) zum Aussenden eines kodierten Schutzsignals, welches es dem Elektrogerät ermöglicht, das Vorhandensein des passiven Dienstes zu detektieren, so dass insbesondere bel Vorliegen des Schutzsignals in dem Elektrogerät eine Sendeleistung und/oder eine Sendefrequenz geändert werden kann.

2. Schutzverfahren nach Anspruch 1, **dadurch gekennzeichnet, dass** ein Betrieb der Sendeeinheit (18) an zumindest einen Betriebsmodus des passiven Dienstes (12) gekoppelt ist.

3. Schutzverfahren nach einem der vorhergehenden Ansprüche, **dadurch gekennzeichnet, dass** die Sendeeinheit (18) dazu vorgesehen ist, ein Schutzsignal mit einer auf einen Schutzradius (20) begrenzten Signalleistung auszusenden.

4. Schutzverfahren nach einem der vorhergehenden Ansprüche, **gekennzeichnet durch** eine Empfangseinheit (22), die zu einem Empfangen eines Schutzsignals eines Elektrogeräts (14, 16) vorgesehen ist.

5. Schutzverfahren zumindest nach Anspruch 4, **gekennzeichnet durch** zumindest eine bidirektionale Schnittstelle (24).

6. Elektrogerät, insbesondere ein Elektrogerät zur Verwendung in einem Verfahren nach Anspruch 1, mit einer Messvorrichtung (26, 28) zum Aussenden und/oder Empfangen eines Messsignals, wobei die Messvorrichtung (26, 28) eine Ultrabreitbandeinheit (34, 36) aufweist, die zu einer Ultrabreitbandmessung vorgesehen ist, und mit einer Fremdsignalerkennungseinheit (30, 32), **dadurch gekennzeichnet, dass** die Fremdsignalerkennungseinheit (30, 32) zu einem Detektieren eines kodierten Schutzsignals einer Schutzvorrichtung (10) zum Schutz eines passiven Funkdienstes (12) zum Empfang von Signalen vorgesehen ist, um das Vorhandensein des Funkdienstes (12) zu detektieren.

7. Elektragerät zumindest nach Anspruch 6, **dadurch gekennzeichnet, dass** die Fremdsignalerkennungseinheit (30, 32) ein Dekodierelement (38, 40) aufweist, die zu einem Dekodieren eines empfangenen Schutzsignals vorgesehen ist.

8. Elektrogerät zumindest nach Anspruch 6, **dadurch gekennzeichnet dass** die Fremdsignalerkennungseinhelt (30, 32) eine bidirektionale Schnittstelle (42, 44) aufweist.

9. Elektrogerät nach einem der Ansprüche 6 bis 8, **gekennzeichnet durch** eine Recheneinheit (46, 48), die dazu vorgesehen ist, einen Abstand (50) zur Schutzvorrichtung (10) bei Vorliegen eines detektierten Schutzsignals der Schutzvorrichtung (10) zu bestimmen.

10. Elektrogerät nach einem der Ansprüche 6 bis 9, **gekennzeichnet durch** eine Recheneinheit (46, 48), die zu einer Änderung einer Messfrequenz und/oder einer Änderung eines Leistungsspektrums der Messvorrichtung (26, 28) bei Vorliegen eines detektierten Schutzsignals und/oder bei Unterschreiten eines Sicherheitsabstands (52) zur Schutzvorrichtung (10) vorgesehen ist.

11. System mit einer Schutzvorrichtung (10) zur Durchführung des Schutzverfahrens zumindest nach Anspruch 1 und zumindest einem Elektrogerät (14, 16) nach Anspruch 6, **dadurch gekennzeichnet, dass** eine Schutzvorrichtung (10) zu einer Aussendung des Schutzsignals mit einer auf die Recheneinheit (46, 48) des Elektrogeräts (14, 16) abgestimmten Sendeleistung vorgesehen ist

12. System nach Anspruch 11, **dadurch gekennzeichnet, dass** die Fremdsignalerkennungseinheit (32) zur Aussendung eines Schutzsignals für die Schutzvorrichtung (10) vorgesehen ist.

13. System zumindest nach Anspruch 11, **dadurch gekennzeichnet, dass** die Schutzvorrichtung (10) zu einem Empfangen des Schutzsignals der Fremdsignalerkennungseinheit (32) vorgesehen ist

14. System nach einem der Ansprüche 11 bis 13, **dadurch gekennzeichnet, dass** die Schutzvorrichtung (10) zu einem Reflektieren des Schutzsignals der Fremdsignalerkennungseinheit (32) vorgesehen ist.

15. Verfahren für ein System (54) nach Anspruch 11, **dadurch gekennzeichnet, dass** ein Schutzsignal durch eine Schutzvorrichtung (10) ausgesendet wird.

16. Verfahren nach Anspruch 15, **dadurch gekennzeichnet, dass** das Schutzsignal mit einer auf einen Schutzradius (20) begrenzten Sendeleistung ausgesendet wird.

17. Verfahren nach einem der Ansprüche 15 bis 16, **dadurch gekennzeichnet, dass** ein Abstand (50) zwischen der Schutzvorrichtung (10) und dem Elektrogerät (14, 16) bestimmt wird.

18. Verfahren zumindest nach Anspruch 17, **dadurch gekennzeichnet, dass** der Abstand (50) mittels einer empfangenen Leistung durch die Fremdsignalerkennungseinheit (30) ermittelt wird.

19. Verfahren zumindest nach Anspruch 17, **dadurch gekennzeichnet, dass** der Abstand (50) mittels einer Laufzeit des Schutzsignals zwischen der Schutzvorrichtung (10) und dem Elektrogerät (16) ermittelt wird.

20. Verfahren nach einem der Ansprüche 15 bis 19, **dadurch gekennzeichnet, dass** bei Vorliegen eines detektierten Fremdsignals der Schutzvorrichtung (10) eine Messleistung und/oder eine Messfrequenz der Messvorrichtung (26, 28) geändert wird.

## Claims

1. Protection method for protecting a passive radio service for receiving signals (12) against an ultrawideband interference signal from an electrical appliance (14, 16), using a transmission unit (18) for emitting a coded protection signal which allows the electrical appliance to detect the presence of the passive service, with the result that a transmission power and/or a transmission frequency can be changed in the electrical appliance particularly when the protection signal is present.

2. Protection method according to Claim 1, **characterized in that** operation of the transmission unit (18) is coupled to at least one method of operation of the passive service (12).

3. Protection method according to either of the preceding claims, **characterized in that** the transmission unit (18) is intended to emit a protection signal at a signal power which is limited to a protection radius (20).

4. Protection method according to one of the preceding claims, **characterized by** a reception unit (22) which is intended to receive a protection signal from an electrical appliance (14, 16).

5. Protection method at least according to Claim 4, **characterized by** at least one bidirectional interface (24).

6. Electrical appliance, particularly an electrical appliance for use in a method according to Claim 1, having a measuring apparatus (26, 28) for emitting and/or receiving a measurement signal, wherein the measuring apparatus (26, 28) has an ultrawideband unit (34, 36) which is intended for ultrawideband measurement, and having an extraneous signal recognition unit (30, 32), **characterized in that** the extraneous signal recognition unit (30, 32) is intended to detect a coded protection signal from a protection apparatus (10) for protecting a passive radio service (12) for receiving signals in order to detect the presence of the radio service (12).

7. Electrical appliance at least according to Claim 6, **characterized in that** the extraneous signal recognition unit (30, 32) has a decoding element (38, 40) which is intended to decode a received protection signal.

8. Electrical appliance at least according to Claim 6, **characterized in that** the extraneous signal recognition unit (30, 32) has a bidirectional interface (42, 44).

9. Electrical appliance according to one of Claims 6 to 8, **characterized by** a computation unit (46, 48) which is intended to determine a distance (50) from the protection apparatus (10) when a detected protection signal from the protection apparatus (10) is present.

10. Electrical appliance according to one of Claims 6 to 9, **characterized by** a computation unit (46, 48) which is intended to change a measurement frequency and/or to change a power spectrum of the measuring apparatus (26, 28) when a detected protection signal is present and/or when a safety distance (52) from the protection apparatus (10) is transgressed.

11. System having a protection apparatus (10) for carrying out the protection method at least according to Claim 1 and at least one electrical appliance (14, 16) according to Claim 6, **characterized in that** a protection apparatus (10) is intended to emit the protection signal at a transmission power that is attuned to the computation unit (46, 48) of the electrical appliance (14, 16).

12. System according to Claim 11, **characterized in that** the extraneous signal recognition unit (32) is intended to emit a protection signal for the protection apparatus (10).

13. System at least according to Claim 11, **characterized in that** the protection apparatus (10) is intended to receive the protection signal from the extraneous signal recognition unit (32).

14. System according to one of Claims 11 to 13, **characterized in that** the protection apparatus (10) is intended to reflect the protection signal from the extraneous signal recognition unit (32).

15. Method for a system (54) according to Claim 11, **characterized in that** a protection signal is emitted by a protection apparatus (10).

16. Method according to Claim 15, **characterized in that** the protection signal is emitted at a transmission power that is limited to a protection radius (20).

17. Method according to either of Claims 15 and 16, **characterized in that** a distance (50) between the protection apparatus (10) and the electrical appliance (14, 16) is determined.

18. Method at least according to Claim 17, **characterized in that** the distance (50) is ascertained by the extraneous signal recognition unit (30) by using a received power.

19. Method at least according to Claim 17, **characterized in that** the distance (50) is ascertained by using a delay in the protection signal between the protection apparatus (10) and the electrical appliance (16).

20. Method according to one of Claims 15 to 19, **characterized in that** a measurement power and/or a measurement frequency of the measuring apparatus (26, 28) is changed when a detected extraneous signal from the protection apparatus (10) is present.

## Revendications

1. Procédé de protection destiné à protéger d'un signal parasite en bande ultralarge d'un appareil électrique (14, 16) une desserte radio passive servant à la réception de signaux (12),
avec une unité émettrice (18) qui émet un signal de protection codé qui permet à l'appareil électrique de détecter la présence de la desserte passive de telle sorte qu'en particulier lorsque le signal de protection est présent, la puissance d'émission et/ou la fréquence d'émission puissent être modifiées dans l'appareil électrique.

2. Procédé de protection selon la revendication 1, **caractérisé en ce que** le fonctionnement de l'unité émettrice (18) est couplé à au moins un mode de fonctionnement de la desserte passive (12).

3. Procédé de protection selon l'une des revendications précédentes, **caractérisé en ce que** l'unité émettrice (18) est prévue pour émettre un signal de protection à une puissance limitée à un rayon de protection (20).

4. Procédé de protection selon l'une des revendications précédentes, **caractérisé en ce qu'**une unité de réception (22) est prévue pour recevoir un signal de protection d'un appareil électrique (14, 16).

5. Procédé de protection selon au moins la revendication 4, **caractérisé par** au moins une interface bidirectionnelle (24).

6. Appareil électrique, en particulier appareil électrique destiné à être utilisé dans un procédé selon la revendication 1 et doté d'un ensemble de mesure (26, 28) qui émet et/ou reçoit un signal de mesure,
l'ensemble de mesure (26, 28) présentant une unité (34, 36) à bande ultralarge qui est prévue pour une mesure en bande ultralarge et
une unité (30, 32) de détection de signaux étrangers,
**caractérisé en ce que**
l'unité (30, 32) de détection de signaux étrangers est prévue pour détecter un signal de protection codé d'un dispositif de protection (10) qui protège une desserte radio passive (12) destinée à recevoir des signaux, pour détecter la présence de la desserte radio (12).

7. Appareil électrique selon au moins la revendication 6, **caractérisé en ce que** l'unité (30, 32) de détection de signaux étrangers présente un élément de décodage (38, 40) prévu pour décoder un signal de protection reçu.

8. Appareil électrique selon au moins la revendication 6, **caractérisé en ce que** l'unité (30, 32) de détection de signaux étrangers présente une interface bidirectionnelle (42, 44).

9. Appareil électrique selon l'une des revendications 6 à 8, **caractérisé par** une unité de calcul (46, 48) prévue pour déterminer la distance (50) par rapport au dispositif de protection (10) lorsqu'un signal de protection provenant de l'ensemble de protection (10) a été détecté.

10. Appareil électrique selon l'une des revendications 6 à 9, **caractérisé par** une unité de calcul (46, 48) prévue pour modifier la fréquence de mesure et/ou pour modifier le spectre de puissance de l'ensemble de mesure (26, 28) lorsqu'un signal de protection a été détecté et/ou lorsqu'une distance de sécurité (52) par rapport à l'ensemble de protection (10) n'est plus atteinte.

11. Système doté d'un ensemble de protection (10) en vue de l'exécution du procédé de protection selon au moins la revendication 1 et au moins un appareil électrique (14, 16) selon la revendication 6, **caractérisé en ce qu'**un ensemble de protection (10) est prévu pour émettre le signal de protection à une puissance d'émission accordée à l'unité de calcul (46, 48) de l'appareil électrique (14, 16).

12. Système selon la revendication 11, **caractérisé en ce que** l'unité (32) de détection de signaux étrangers est prévue pour émettre un signal de protection à destination de l'ensemble de protection (10).

13. Système selon la revendication 11, **caractérisé en ce que** l'ensemble de protection (10) est prévu pour recevoir le signal de protection de l'unité (32) de détection de signaux étrangers.

14. Système selon l'une des revendications 11 à 13, **caractérisé en ce que** l'ensemble de protection (10) est prévu pour réfléchir le signal de protection de l'unité (32) de détection de signaux étrangers.

15. Procédé pour un système (54) selon la revendication 11, **caractérisé en ce qu'**un signal de protection est émis par un ensemble de protection (10).

16. Procédé selon la revendication 15, **caractérisé en ce que** le signal de protection est émis à une puissance d'émission limitée à un rayon de protection (20).

17. Procédé selon l'une des revendications 15 et 16, **caractérisé en ce que** la distance (50) entre l'ensemble de protection (10) et l'appareil électrique (14, 16) est déterminée.

18. Procédé selon au moins la revendication 17, **caractérisé en ce que** la distance (50) est déterminée par l'unité (30) de détection de signaux étrangers au moyen de la puissance reçue.

19. Procédé selon au moins la revendication 17, **caractérisé en ce que** la distance (50) est déterminée au moyen du temps de parcours du système de protection entre l'ensemble de protection (10) et l'appareil électrique (16).

20. Procédé selon l'une des revendications 15 à 19, **caractérisé en ce que** lorsqu'un signal étranger a été détecté par l'ensemble de protection (10), la puissance de mesure et/ou la fréquence de mesure de l'ensemble de mesure (26, 28) sont modifiées.
